# EUROPÄISCHE PATENTSCHRIFT

(11) **EP 0 768 168 B1**
(45) Veröffentlichungstag und Bekanntmachung des Hinweises auf die Patenterteilung: **03.04.2002**
(21) Anmeldenummer: 96116322.7
(22) Anmeldetag: 11.10.1996
(51) Int. Cl.: B29C 71/02, B29C 59/04

(54) **Verfahren zur Herstellung einer Folienbahn und eine Folienbahn**
Method for producing a web and a web
Procédé pour la fabrication d'une bande et une bande

(30) Priorität: 12.10.1995 DE 19538049
(43) Veröffentlichungstag der Anmeldung: 16.04.1997
(73) Patentinhaber: BP Chemicals PlasTec GmbH, 89165 Dietenheim (DE)
(72) Erfinder: Börmann, Ludwig, 83547 Babensham (DE)
(74) Vertreter: Dost, Wolfgang, Dr.rer.nat., Dipl.-Chem.

(56) Entgegenhaltungen:
- EP-A- 0 319 222
- EP-A- 0 553 808
- EP-A- 0 616 880
- US-A- 4 978 486
- PATENT ABSTRACTS OF JAPAN vol. 012, no. 454 (M-769), 29.November 1988 & JP 63 182135 A (MITSUI TOATSU CHEM INC), 27.Juli 1988,
- PATENT ABSTRACTS OF JAPAN vol. 017, no. 455 (M-1466), 20.August 1993 & JP 05 104689 A (MITSUBISHI KASEI POLYTEC CO), 27.April 1993,

## Beschreibung

Die Erfindung betrifft ein Verfahren zur Herstellung einer Folienbahn, speziell zur Verwendung als Hygienefolien, z.B. Windelfolien und Medikalfolien.

Diese Hygienefolien werden vorzugsweise aus Polyolefinen hergestellt und besitzen eine Dicke im Bereich von 5 bis 40 µm. An z.B. Folien für Hygieneprodukte werden hierbei eine ganze Reihe von Anforderungen gestellt. Sie müssen einerseits flüssigkeitsdicht sein und andererseits einen weichen, stoffähnlichen Griff besitzen. Insbesondere bei ihrer Verwendung für Inkontinenzprodukte soll die Geräuschentwicklung möglichst gering sein, d.h. die Folien sollen ein günstiges Raschelverhalten besitzen. Das Raschelverhalten gehört zu den haptischen Eigenschaften der Folie, wobei unter diesem Begriff folgende Eigenschaften zusammengefaßt werden: Weichheit, Geschmeidigkeit, Geräuschentwicklung beim Knittern und Bewegen, Biegesteifigkeit, Knickwiderstand und Dehnelastizität.

In den letzten Jahren sind die in Windeln und Inkontinenzprodukten enthaltenen Saugkörper ständig dünner geworden, was insbesondere durch die Verwendung von sogenannten Superabsorber-Polymeren ermöglicht wurde. Diese Superabsorber-Polymere finden in Form grobkörniger Pulver Verwendung, und die Hygienefolien müssen eine derartige Festigkeit besitzen, daß ein Durchstoßen der Folie durch die einzelnen Körner, z.B. bei Belastung durch hinsetzen oder sonstige Bewegung des Trägers, mit Sicherheit vermieden wird. Diese Anforderung an die Durchstoßfestigkeit hat bis heute dem Trend zu dünneren Windelfolien Grenzen gesetzt. Eine weitere Anforderung an Hygienefolien besteht in einer Mindestzugfestigkeit in Maschinenrichtung, die für eine Verarbeitung der Folienbahnen auf den schnellaufenden Maschinen der Windelhersteller erforderlich ist. Diese Mindestzugfestigkeit wird üblicherweise als 5%-Modul angegeben, d.h. die Zugfestigkeit bei 5% Dehnung, die z.B. mindestens 0,79 N/cm (2N/in) betragen soll.

Bei der Herstellung der länglichen Zuschnitte für Windeln und dergleichen werden diese üblicherweise aus den Folienbahnen so geschnitten, daß die Längsrichtung der Zuschnitte mit der Längsrichtung (Maschinenrichtung) der Folienbahnen übereinstimmt. Bei der fertigen Windel wird der Zuschnitt in Längsrichtung zwischen den Beinen hindurchgeführt. Im Bund wird der Zuschnitt seitlich durch verschiedenste Verschlüsse, z.B. durch Kleb- oder Klettverschlüsse oder durch Verschweißen, zusammengehalten. Hierbei hat sich gezeigt, daß der Tragekomfort nicht zufriedenstellend ist, weil, infolge der relativ hohen Zugfestigkeit der Windelfolie auch in Querrichtung, keine elastische Anpassung der Windel an die Körperbewegungen des Trägers erfolgt. Es ist zwar bekannt, über einen Mehrschichtaufbau der Hygienefolien, z.B. mittels einer mehrschichtigen Coextrusionsfolie, die querelastischen Eigenschaften zu verbessern, jedoch sind Mehrschichtverbundfolien in ihrer Herstellung aufwendig, und darüber hinaus ist die Verbesserung der Querelastizität in ihrem Ausmaß nicht zufriedenstellend.

EP-A-0 553 808 betrifft luftdurchlässige und flüssigkeitsundurchlässige Polyolefinplastikschichten, die anorganische Füllpartikel enthalten und einem Strecken unterworfen werden, um die Schicht mit feinen luftdurchlässigen Poren zu versehen sowie aufzurauhen. Die so hergestellte oberflächenaufgerauhte Schicht wird anschließend thermowalzgeprägt. In EP-A-0 616 880 wird ein Verfahren zur Herstellung einer Folie aus einem thermoplastischen Harz offenbart, bei dem die thermoplastische Folie auf eine Temperatur zwischen ihrem Erweichungspunkt und ihrem Schmelzpunkt erwärmt wird und anschließend gekuhlt wird.

Überraschender Weise wurde nun gefunden, daß man bereits bei einer einschichtigen aber auch mehrschichtigen Folienbahn eine erheblich verbesserte Querelastizität - unter Beibehaltung der sonstigen Eigenschaften, insbesondere der Zugfestigkeit in Längsrichtung - erhält, wenn man bei der Weiterverarbeitung der Folienbahn eine Erwärmung bis zum schmelzflüssigen Zustand des Polymermaterials vornimmt.

Gegenstand der Erfindung ist somit ein Verfahren zur Herstellung einer Folienbahn, wobei eine Ausgangsfolienbahn aus thermoplastischem Polymermaterial nach ihrer Erwärmung durch einen gekühlten Walzenspalt geführt wird, das dadurch gekennzeichnet ist, daß die Erwärmung der Folienbahn bis zum schmelzflüssigen Zustand des Polymermaterials führt.

Bekanntlich besitzen Polymere keinen scharf definierten Schmelzpunkt sondern einen Schmelzbereich, wobei sich jedoch den kristallinen Bereichen des Polymermaterials ein Kristallitschmelzpunkt zuordnen läßt. Dieser Kristallitschmelzpunkt liegt stets höher als der Schmelzpunkt (Bereich) der nichtkristallinen Bestandteile. In jedem Fall ist der schmelzflüssige Zustand dadurch beschrieben, daß der Schubmodul gegen Null geht und - im Falle von Polymeren mit kristallinen Bereichen - letztere nicht mehr nachweisbar sind.

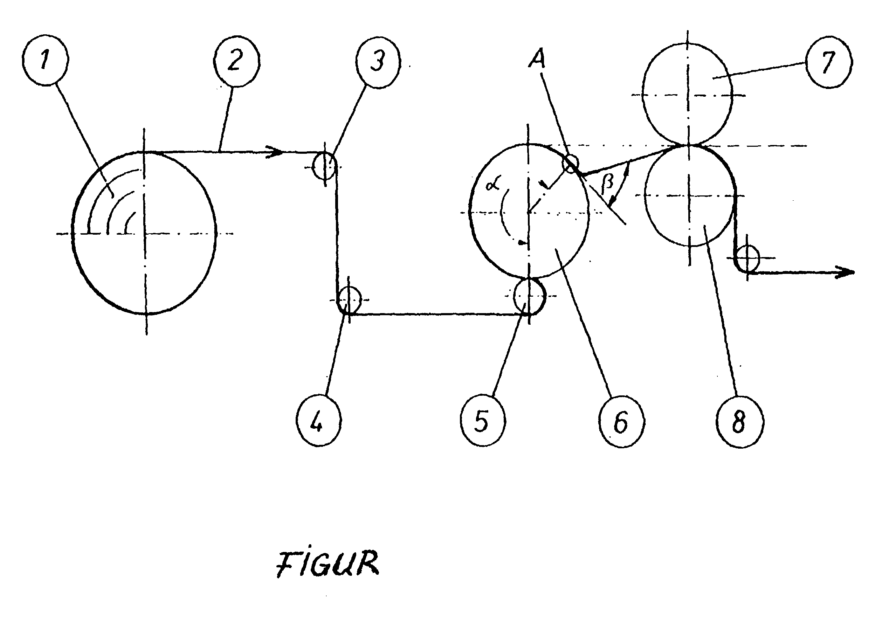

Erfindungsgemäß kann die Erwärmung der Ausgangsfolienbahn bis zum schmelzflüssigen Zustand auf verschiedene Weise erfolgen. Vorzugsweise erfolgt jedoch die Erwärmung mittels einer oder mehrerer Kontaktwalzen/-Heizwalzen, die mittels eines Wärmeträgers auf die vorgegebene Temperatur erhitzt wird. Für Polyolefine liegt diese Temperatur z.B. im Bereich von 120 bis 140 °C. Um zu gewährleisten, daß die Ausgangsfolienbahn die Walzentemperatur tatsächlich erreicht, ist für eine ausreichende Verweilzeit der Ausgangsfolie auf der Heizwalzenoberfläche zu sorgen. Dies kann auch durch Vergrößerung des Umschlingungswinkels α (vgl. die Figur), durch Vergrößerung des Walzendurchmessers und/oder Verringerung der Folienbahngeschwindigkeit nach Maßgabe der Foliendicke erfolgen. Die Foliendicke liegt bei Hygiene- und Medikalfolien üblicherweise im Bereich von 5 bis 40 µm.

In einer anderen Ausführungsform erfolgt die Erwärmung der Ausgangsfolienbahn mittels Strahlungswärme, entweder ausschließlich oder zur Unterstützung der Erwärmung mittels Heizwalzen.

Die den Walzenspalt bildenden Walzen sind so gekühlt, z.B. mit Wasser in einem Temperaturbereich von 5 bis 20 °C, daß eine rasche Abkühlung der Folienbahn auf Raumtemperatur gewährleistet ist. Der Abstand zwischen der letzten Heizwalze und dem Kühl-Walzenspalt sollte hierbei wegen möglicher Wärmeverluste nicht zu groß sein. Für einen Mindestabstand ist ohnehin durch die Abmessungen der Walzen eine Grenze gesetzt.

Infolge des schmelzflüssigen Zustandes der Folienbahn auf der Heizwalze kommt es zu einer Verschleppung der Ablösung der Folienbahn in Drehrichtung der Heizwalze. Das Ausmaß der Verschleppung ist von den Verfahrensparametern und dem Folienmaterial abhängig und wird durch einen Ablösewinkel β (vgl. die Figur) definiert. Der kleinste Winkelwert (0°) ist durch die vom Kühl-Walzenspalt an die Heizwalze gelegte Tangente (in der Figur gestrichelt gezeichnet) gegeben, während der Winkel nach größeren Werten im Prinzip nur durch den Auflegepunkt der Ausgangsfolie an die Heizwalze begrenzt ist. In der praktischen Durchführung des Verfahrens sind jedoch Ablösewinkel β von deutlich über 90° unzweckmäßig, weil es dann zu einer Schlaufen- bzw. Sackbildung der schmelzflüssigen Folienbahn an der Heizwalze kommen kann.

Bei dem Kühl-Walzenspalt kann es sich z.B. um einen Glattwalzenspalt handeln. Im Fall von Hygienefolien wird der Walzenspalt jedoch vorzugsweise von einem Walzenpaar mit Strukturwalze gebildet, wodurch die Folienbahn eine strukturierte Oberfläche erhält.

Die Folienbahngeschwindigkeiten bewegen sich in üblichem Rahmen, z.B. im Bereich von 50 bis 500 m/min, abhängig von den Folienparametern und den anderen Verfahrensbedingungen.

Als Ausgangsfolienbahnen für die Durchführung des Verfahrens der Erfindung sind alle Bahnen aus thermoplastischen Polymeren geeignet, für die Verwendung auf dem Hygienesektor vorzugsweise solche aus Polyolefinen. Hierzu ist eine Vielzahl von Handelsprodukten am Markt erhältlich, vorzugsweise LDPE (Low Density Polyethylene), LLDPE (Linear Low Density Polyethylene), MDPE (Medium Density Polyethylene), HDPE (High Density Polyethylene) und verschiedene Polypropylene sowie Copolymerisate von Ethylen oder Propylen mit anderen Comonomeren. Diese Polymere werden entweder in reiner Form oder als Polymergemische verwendet. Übliche Rezepturen für Hygienefolien sind z.B. Gemische aus 10 bis 90 Gew.-% LDPE, 10 bis 90 Gew.-% LLDPE und 0 bis 50% MDPE, zum Beispiel ein Gemisch aus 80% LDPE, 20% LLDPE und anforderungsgerechten Pigmentierungen. Handelsübliche Polymere für Hygienefolien besitzen die nachfolgend angegebenen Schmelzbereiche bzw. Kristallitschmelzpunkte:
LDPE = 112 bis 114 °C,
LLDPE = 119 bis 125°C
MDPE = 125 bis 128°C

Üblicherweise werden Hygienefolien eingefärbt, z.B. weiß mit Titandioxid. Hinzu kommen übliche Zusatzstoffe und Verarbeitungshilfsmittel, die teilweise Betriebsgeheimnis der Verarbeiter sind. Bei der oben angegebenen Rezeptur aus LDPE, LLDPE und MDPE liegt eine bevorzugte Verfahrenstemperatur (Oberflächentemperatur der letzten Heizwalze) im Bereich von 120 bis 140 °C, wobei bei einer Temperatur von etwa 130 °C besonderes gute Ergebnisse erzielt wurden.

Eine besondere Schwierigkeit bei der Verarbeitung im schmelzflüssigen Zustand mittels Heizwalzen besteht darin, daß die schmelzflüssige Folienbahn sehr viel stärker an den Heizwalzen haftet als bei der herkömmlichen Verarbeitung unterhalb der Temperatur des schmelzflüssigen Zustands. Dies erfordert eine erhöhte Ablösekraft. Die erhöhte Haftung der schmelzflüssigen Folienbahn auf der Heizwalze hat auch eine Verschiebung des Ablösepunktes in Drehrichtung der Heizwalze zur Folge, was wiederum eine Vergrößerung des Ablösewinkels bedeutet. Die Erhöhung der Ablösekraft kann hierbei soweit gehen, daß die Folienbahn abreißt. Andererseits kann die erhöhte Haftung dazu führen, daß sich die schmelzflüssige Folienbahn überhaupt nicht mehr von der Heizwalze ablösen läßt, mit der Walze umläuft, und auf diese Weise die Produktion zum Erliegen kommt. Aus diesem Grund wird erfindungsgemäß vorzugsweise eine Heizwalze mit modifizierter Oberfläche verwendet, die eine verringerte Haftung gegenüber der schmelzflüssigen Folienbahn aufweist. Vorzugsweise wird hierzu eine PTFE(Polytetrafluorethylen)-beschichtete Heizwalze verwendet. Auch andere antihaftende Oberflächen sind geeignet.

Die für die Ablösung der Folienbahn von der Heizwalze erforderliche Kraft wird von einer Vorspannung aufgebracht, die durch eine gegenüber der Bahngeschwindigkeit der Heizwalze erhöhte Bahngeschwindigkeit (Voreilung) im Kühl-Walzenspalt erreicht wird. Zur Aufbringung der Ablösekraft sind wenige Prozent Voreilung ausreichend, z.B. 0,5 bis 5 %. Die Voreilung kann auch sehr viel höher gewählt werden, z.B. wenn eine Verringerung der Foliendicke erfolgen soll. Zum Beispiel erfolgt unter Anwendung einer Voreilung von 30%, eine Verringerung der Foliendicke von 30 auf 20 µm.

Für die Durchführung des Verfahrens der Erfindung sind als Ausgangsfolienbahnen beliebige thermoplastische Folienbahnen geeignet, vorzugsweise finden jedoch solche Folienbahnen Verwendung, die bei ihrer Herstellung einer Verstreckung in Querrichtung unterworfen worden sind. Hierbei sind wiederum Blasfolienbahnen bevorzugt. Das Verfahren der Erfindung wird vorzugsweise mit einschichtigen Folienbahnen durchgeführt, es können jedoch auch mehrschichtige Folienbahnen verwendet werden.

Das nachfolgende Beispiel erläutert die Erfindung.

Gemäß der einzigen Figur wird eine Ausgangsfolienbahn 2 von einer Rolle 1 abgezogen. Die Ausgangsfolienbahn ist nach dem Blasverfahren gemäß nachfolgender Tabelle I hergestellt worden.

**TABELLE I.**

| **Folienrezeptur** | | | | |
|---|---|---|---|---|
| Menge Gew.-% | Bestandteil | Dichte, g/ml | Kristallitschmelzpunkt °C | Schmelzindex, g/10 min⁴ |
| 75 | LDPE¹ | 0,922-0,924 | 113 | 0,60-0,90 |
| 20 | LLDPE² | 0,9155-0,9205 | 120 | 0,74-1,28 |
| 5 | Weißkonzentrat³ | 1,69 | - | - |

| | | | | |
|---|---|---|---|---|
| ¹ Daplen 2410 F der Firma PCD | | | | |
| ² Flexirene FG 2001 der Firma Eni-Chem | | | | |
| ³ Remafin weiß RB6-AE der Firma Novachrome, TiO₂-Gehalt ca. 3,5% | | | | |
| ⁴ 190°C/2,16 kg | | | | |

Die Bedingungen beim Blasen des Folienschlauches sind aus Tabelle II ersichtlich.

**Tabelle II.**

| **Blasbedingungen** | |
|---|---|
| Ringdüse | 600 mm Durchmesser |
| Düsenspalt | 1 mm |
| Schlauchdurchmesser | 2200 mm |
| Foliendicke | 28 µm |
| Schmelztemperatur | 240 °C |

Der erhaltene Folienschlauch wurde in Längsrichtung aufgeschnitten und auf zwei Rollen aufgewickelt. Die Folienbreite beträgt 2,5 m.

Von der Rolle 1 läuft die Folienbahn 2 über Umlenkwalzen 3, 4 und eine Anpreßwalze 5 auf die Heizwalze 6. Bei der Heizwalze 6 handelt es sich um eine antihaftend beschichtete Stahlwalze, die mittels Wärmeträger auf eine Oberflächentemperatur von 130 °C erhitzt wird. Die Heizwalze 6 wird mit einer Bahngeschwindigkeit von 260 m/min angetrieben. Von der Heizwalze 6 läuft die Folienbahn unter einem Ablösewinkel β (Ablösepunkt A) in einen Kühl-Walzenspalt, der von einer Walze 7 und einer Strukturwalze 8 gebildet wird, wobei die Folienbahn eine strukturierte Oberfläche erhält. Das Walzenpaar 7/8 ist wassergekühlt (15°C). Die den Spalt bildenden Walzen 7 und 8 sind so angetrieben, daß gegenüber der Bahngeschwindigkeit der Heizwalze 6 von 260 m/min eine Voreilung von 5% (13 m/min) besteht. Diese Voreilung hat eine Verringerung der Folienbahndicke von 28 auf 25 µm zur Folge. Hierbei bildet sich ein Ablösewinkel β ≤ 90° aus. Der Umschlingungswinkel α beträgt etwa 200°. Bei dem Umschlingungswinkel α handelt es sich um denjenigen Winkel der gebildet wird vom ersten Berührungspunkt der Ausgangsfolienbahn 2 mit der Heizwalze 6 bis zu demjenigen Punkt in Drehrichtung der Heizwalze 6 gesehen, wo die Ablösung der Folienbahn von der Heizwalze erfolgt.

Die Eigenschaften der erhaltenen Folienbahn im Vergleich zu einer Folienbahn, die unter sonst gleichen Bedingungen, jedoch bei einer Temperatur der Heizwalze 6 von 112 °C hergestellt worden ist, sind in der nachfolgenden Tabelle III zusammengestellt.

Die in der Tabelle III erhaltenen Meßwerte wurden wie folgt ermittelt.

### 1. 5%-Modul (Zugversuch) gemäß DIN 53455

- Probenbreite:: 25,4 mm
- Probenlänge:: 100 mm
- Prüfgeschwindigkeit:: 500 mm/min (VIII, Kennziffer 8, entspricht ISO 527-1976 Speed H)
- Prüfrichtung:: In Maschinenrichtung der Folie
- Prüfumfang:: 15 Muster

### 2. Querelastizität

Prüfverfahren "Zugelastisches Verhalten" gemäß DIN 53835 Teil 2 Gemessen wird das elastische Verhalten der Folien quer zur Maschinenrichtung.
- Probenabmessungen:: Breite 25,4 mm
Dicke 25µm
- Einspannlänge:: 100 mm
- Prüfgeschwindigkeit:: 500 mm/min
- Prüfzyklus:: Die Prüfung beginnt mit der Dehnung der Folie auf 100% ihrer Ausgangslänge. Anschließend wird die Folie 30 sec. bei dieser Dehnung gehalten und die Kraftabnahme (Relaxation) bestimmt. Die Probe wird bis auf die Einspannlänge zurückgefahren und verweilt hier wiederum 30 sec. Die Probe wird diesem Lastspiel 2x unterworfen.
- Auswertung:: Bestimmt wird die elastische Dehnung der Folie nach dem 2. Lastspiel.

### 3. Durchstoßfestigkeit:

Die Durchstoßfestigkeit wurde wie folgt bestimmt.
Die Probe wird waagrecht und faltenfrei in eine ringförmige Klemmvorrichtung gespannt. Der kreisrunde lichte Durchmesser der Öffnung beträgt 76,2 mm. Mittels einer Säule und einer Haltevorrichtung kann eine Stahlkugel aus verschiedenen Fallhöhen mittig auf die Probe im freien Fall auftreffen. Die Stahlkugel weist ein Gewicht von 28,1 g und einen Durchmesser von 19,05 mm auf. Der in Tabelle III angegebene Wert für die Durchstoßfestigkeit entspricht derjenigen Fallhöhe in mm, bei der die Probe gerade nicht mehr von der Stahlkugel durchstoßen wird. Risse in der Probe infolge des Auftreffens der Stahlkugel werden bereits als Durchstoß gewertet. Für jeden einzelnen Falltest wird die Probe weiterbewegt, so daß sich im Bereich der Klemmöffnung immer nur einwandfreie Proben, d.h. im Vorfeld unbelastetes Material, befindet.

### 4. Raschelverhalten und Weichheit:

Die zur Prüfung anstehenden Muster wurden bei Normalklima nach DIN 50014-23/50-2 für mindestens 16 Stunden gelagert. Die Mustergröße entspricht DIN A4, die Musterdicke jeweils 25µm.

Für die Prüfung wurden 15, im Umgang mit Hygienefolien erfahrene Testpersonen herangezogen. Jeder Testperson wurde jeweils ein erfindungsgemäßes und ein Vergleichsmuster vorgelegt, wobei die Muster für die Testperson nicht ersichtlich gekennzeichnet waren. Die Durchführung der 15 Einzelbeurteilungen durch die Testpersonen fand unabhängig voneinander in einem hierfür ausgewählten Raum statt.

Jede Testperson bewertete anhand ihres subjektiven Empfindens die Folienmuster mittels nachfolgender Punkteskala für die Raschellautstärke.
1 = Raschelverhalten sehr gut
2 = Raschelverhalten gut
3 = Raschelverhalten befriedigend
4 = Raschelverhalten ausreichend
5 = Raschelverhalten mangelhaft

In ähnlicher Weise erfolgte die Bewertung der Weichheit nach einer Punkteskala von 1 = sehr gut bis 5 = mangelhaft.

**Tabelle III.**

| **Folieneigenschaften** | | | | | | | |
|---|---|---|---|---|---|---|---|
| | 5%-Modul, (N/in) N/cm | Querelastizität, % | Durchstoß festigkeit, mm | Raschelverhalten | | Weichheit | |
| | | | | Raschelverhalten | Standardabweichung | Weichheit | Standardabweichung |
| Erfindung | 1,4 (3,5) | 60,9 | > 1200 | 1,86 | 0,83 | 1,53 | 0,64 |
| Vergleich | 1,6 (4,0) | 51,8 | 500 | 3,93 | 1,03 | 3,53 | 0,99 |

Die in Tabelle III angegebenen Werte stellen das arithmetische Mittel aus den 15 Einzelbewertungen dar.

## Patentansprüche

1. Verfahren zur Herstellung einer Folienbahn, wobei eine Ausgangsfolienbahn (2) aus thermoplastischem Polymermaterial nach ihrer Erwärmung durch einen gekühlten Walzenspalt geführt wird, **dadurch gekennzeichnet, daß** die Erwärmung der Folienbahn (2) bis zum schmelzflüssigen Zustand des Polymermaterials führt.

2. Verfahren nach Anspruch 1, **dadurch gekennzeichnet, daß** man die Erwärmung der Folienbahn (2) bis zum schmelzflüssigen Zustand mittels einer oder mehrerer Heizwalzen (6) durchführt.

3. Verfahren nach Anspruch 2, **dadurch gekennzeichnet, daß** man Heizwalzen mit verringerter Haftneigung gegenüber der schmelzflüssigen Folienbahn verwendet.

4. Verfahren nach einem der Ansprüche 1 bis 3, **dadurch gekennzeichnet, daß** man eine Ausgangsfolienbahn (2) mit einer Dicke im Bereich von 5 bis 40 µm verwendet.

5. Verfahren nach einem der Ansprüche 2 bis 4, **dadurch gekennzeichnet, daß** man die Heizwalzen (6) mit einer Bahngeschwindigkeit von 50 bis 500 m/min antreibt.

6. Verfahren nach einem der Ansprüche 2 bis 5, **dadurch gekennzeichnet, daß** man im Kühl-Walzenspalt eine erhöhte Bahngeschwindigkeit (Voreilung) gegenüber der Bahngeschwindigkeit der Heizwalzen (6) aufrecht erhält.

7. Verfahren nach Anspruch 6, **dadurch gekennzeichnet, daß** man eine Voreilung von 0,5 bis 10% aufrecht erhält.

8. Verfahren nach einem der Ansprüche 2 bis 7, **dadurch gekennzeichnet, daß** man einen Ablösewinkel β von ≤ 90° aufrecht erhält.

9. Verfahren nach einem der Ansprüche 1 bis 8, **dadurch gekennzeichnet, daß** man den Walzenspalt zur Oberflächenstrukturierung der Folienbahn ausbildet.

10. Verfahren nach einem der Ansprüche 1 bis 9, **dadurch gekennzeichnet, daß** man eine Ausgangsfolienbahn (2) aus einem Polyolefin oder Olefincopolymerisat verwendet.

11. Verfahren nach Anspruch 10, **dadurch gekennzeichnet, daß** man eine Ausgangsfolienbahn (2) aus Polyethylen verwendet.

12. Verfahren nach Anspruch 11, **dadurch gekennzeichnet, daß** man eine Ausgangsfolienbahn (2) verwendet, die aus einem Polymergemisch aus 10 bis 90 Gew.-% LDPE, 10 bis 90 Gew.-% LLDPE und 0 bis 50% MDPE hergestellt worden ist.

13. Verfahren nach einem der Ansprüche 10 bis 12, **dadurch gekennzeichnet, daß** man die Temperatur der Heizwalzen (6) im Bereich von 120 bis 140 °C hält.

14. Verfahren nach Anspruch 13, **dadurch gekennzeichnet, daß** man die Temperatur der Heizwalzen (6) auf etwa 130 °C hält.

15. Verfahren nach einem der Ansprüche 1 bis 14, **dadurch gekennzeichnet, daß** man eine Ausgangsfolienbahn (2) verwendet, die im Verlauf ihrer Herstellung einer Querverstreckung unterworfen worden ist.

16. Verfahren nach Anspruch 15, **dadurch gekennzeichnet, daß** die Ausgangsfolienbahn (2) nach dem Blasverfahren erhalten worden ist.

17. Verfahren nach Anspruch 15, **dadurch gekennzeichnet, daß** die Ausgangsfolienbahn (2) nach dem Breitschlitzverfahren extrudiert und querverstreckt worden ist.

18. Folienbahn, erhältlich durch ein Verfahren nach einem der vorhergehenden Ansprüche.

19. Folienbahn nach Anspruch 18, bestehend aus Polyethylen oder Polyethylen-Blends.

20. Folienbahn nach Anspruch 18, bestehend aus Polypropylen oder Polypropylen-Blends.

21. Verwendung der Folienbahn nach einem der Ansprüche 18 bis 20 als Hygienefolie oder Medikalfolie.

## Claims

1. A process for the production of a film web, wherein a starting film web (2) of thermoplastic polymer material is passed, after warming, through a cooled roll nip, **characterized in that** the film web (2) is warmed until the polymer material is in the molten state.

2. The process as claimed in claim 1, **characterized in that** the film web (2) is warmed to the molten state by means of one or more heating rolls (6).

3. The process as claimed in claim 2, **characterized in that** heating rolls having reduced adhesion tendency to the molten film web are used.

4. The process as claimed in any one of claims 1 to 3, **characterized in that** a starting film web (2) having a thickness in range of from 5 to 40 µm is used.

5. The process as claimed in any one of claims 2 to 4, **characterized in that** the heating rolls (6) are driven at a web speed of from 50 to 500 m/min.

6. The process as claimed in any one of claims 2 to 5, **characterized in that** an increased web speed (overfeed) is maintained in the cooling roll nip compared with the web speed on the heating rolls (6).

7. The process as claimed in claim 6, **characterized in that** an overfeed of 0.5 to 10% is maintained.

8. The process as claimed in any one of claims 2 to 7, **characterized in that** a detachment angle β of ≤90° is maintained.

9. The process as claimed in any one of claims 1 to 8, **characterized in that** the roll nip is designed for surface structuring of the film web.

10. The process as claimed in any one of claims 1 to 9, **characterized in that** a starting film web (2) of a polyolefin or olefin copolymer is used.

11. The process as claimed in claim 10, **characterized in that** a starting film web (2) of polyethylene is used.

12. The process as claimed in claim 11, **characterized in that** a starting film web (2) produced from a polymer blend of from 10 to 90% by weight of LDPE, from 10 to 90% by weight of LLDPE and from 0 to 50% of MDPE is used.

13. The process as claimed in any one of claims 10 to 12, **characterized in that** the temperature of the heating rolls (6) is held in the range of from 120 to 140°C.

14. The process as claimed in claim 13, **characterized in that** the temperature of the heating rolls (6) is held at about 130°C.

15. The process as claimed in any one of claims 1 to 14, **characterized in that** a starting film web (2) which has been subjected during production to transverse stretching is used.

16. The process as claimed in claim 15, **characterized in that** the starting film web (2) has been attained by the blowing process.

17. The process as claimed in claim 15, **characterized in that** the starting film web (2) has been extruded by the slit-die extrusion and has been stretched in the transverse direction.

18. A film web obtainable by a process according to any one of the preceding claims.

19. The film web as claimed in claim 18, consisting of polyethylene or polyethylene blends.

20. The film web as claimed in claim 18, consisting of polypropylene or polypropylene blends.

21. Use of a film web as claimed in any one of claims 18 to 20 as hygiene film or medical film.

## Revendications

1. Procédé de fabrication d'une feuille continue, dans lequel une feuille continue de départ (2) en un matériau polymère thermoplastique est, après avoir été chauffée, guidée dans l'espace de refroidissement entre des cylindres, **caractérisé en ce que** le chauffage de la feuille continue (2) amène le matériau polymère à prendre un état fondu.

2. Procédé selon la revendication 1, **caractérisé en ce qu'**on met en oeuvre le chauffage de la feuille continue (2) jusqu'à l'état fondu à l'aide d'un ou plusieurs cylindres chauffants (6).

3. Procédé selon la revendication 2, **caractérisé en ce qu'**on utilise des cylindres chauffants ayant une tendance réduite à adhérer à la feuille continue fondue.

4. Procédé selon l'une des revendications 1 à 3, **caractérisé en ce qu'**on utilise une feuille continue de départ (2) ayant une épaisseur de 5 à 40 µm.

5. Procédé selon l'une des revendications 2 à 4, **caractérisé en ce qu'**on entraîne les cylindres chauffants (6) à une vitesse de bande de 50 à 500 m/min.

6. Procédé selon l'une des revendications 2 à 5, **caractérisé en ce qu'**on maintient dans l'espace de refroidissement entre les cylindres une vitesse de bande (avance) supérieure à la vitesse de bande des cylindres chauffants (6).

7. Procédé selon la revendication 6, **caractérisé en ce qu'**on maintient une avance de 0,5 à 10 %.

8. Procédé selon l'une des revendications 2 à 7, **caractérisé en ce qu'**on maintient un angle de détachement β ≤ 90°.

9. Procédé selon l'une des revendications 1 à 8, **caractérisé en ce que** l'on configure l'espace entre les cylindres pour assurer une structuration superficielle de la feuille continue.

10. Procédé selon l'une des revendications 1 à 9, **caractérisé en ce qu'**on utilise une feuille continue de départ (2) en une polyoléfine ou un copolymêre d'oléfine.

11. Procédé selon la revendication 10, **caractérisé en ce qu'**on utilise une feuille continue de départ (2) en polyéthylène.

12. Procédé selon la revendication 11, **caractérisé en ce qu'**on utilise une feuille continue de départ (2) qui a été préparée à partir d'un mélange de polymères constitué de 10 à 90 % en poids de PEBD, de 10 à 90 % en poids de PEBDL et de 0 à 50 % de PEMD.

13. Procédé selon l'une des revendications 10 à 12, **caractérisé en ce qu'**on maintient dans la plage de 120 à 140°C la température des cylindres chauffants.

14. Procédé selon la revendication 13, **caractérisé en ce qu'**on maintient à environ 130°C la température des cylindres chauffants (6).

15. Procédé selon l'une des revendications 1 à 14, **caractérisé en ce qu'**on utilise une feuille continue de départ (2) qui au cours de sa fabrication a été soumise à un étirage transversal.

16. Procédé selon la revendication 15, **caractérisé en ce que** la feuille continue de départ (2) a été obtenue par un procédé par soufflage.

17. Procédé selon la revendication 15, **caractérisé en ce que** la feuille continue de départ (2) a été extrudée par le procédé à la filière plate et a subi un étirage transversal.

18. Feuille continue pouvant être obtenue par un procédé selon l'une des revendications précédentes.

19. Feuille continue selon la revendication 18, constituée de polyéthylène ou de mélanges de polyéthylène.

20. Feuille continue selon la revendication 18, constituée de polypropylène ou de mélanges de polypropylène.

21. Utilisation de la feuille continue selon l'une des revendications 18 à 20 en tant que feuille hygiénique ou feuille à usage médical.
